# FASCICULE DE BREVET EUROPEEN

(11) **EP 0 604 322 B1**
(45) Date de publication et mention de la délivrance du brevet: **12.03.1997**
(21) Numéro de dépôt: 93403161.8
(22) Date de dépôt: 23.12.1993
(51) Int. Cl.: B60S 1/38

(54) **Essuie-glace du type comportant un accessoire aérodynamique**
Scheibenwischer mit aerodynamischem Zusatzgerät
Windscreen wiper having an aerodynamic attachment

(30) Priorité: 23.12.1992 FR 9215638
(43) Date de publication de la demande: 29.06.1994
(73) Titulaire: PAUL JOURNEE S.A., F-92700 Colombes (FR)
(72) Inventeur: Journée, Maurice, F-60240 Reilly (FR); Duda, Jean, F-60175 Villeneuve-Les-Sablons (FR)
(74) Mandataire: Lemaire, Marc

(56) Documents cités:
- EP-A- 0 281 397
- EP-A- 0 311 471
- EP-A- 0 459 302
- EP-A- 0 519 826
- FR-A- 2 676 694
- GB-A- 2 030 447

## Description

La présente invention concerne un essuie-glace du type comportant un bras d'essuie-glace, un balai d'essuie-glace, et au moins un accessoire aérodynamique fixé au balai et/ou au bras d'essuie-glace et qui s'étend longitudinalement le long d'au moins une partie du balai et/ou du bras d'essuie-glace.

On connaît de nombreux exemples de réalisation d'un tel type d'essuie-glace dans lequel l'accessoire aérodynamique est un volet ou un déflecteur aérodynamique qui est relié à l'essuie-glace de façon à accroître la pression d'essuyage de l'essuie-glace sur la vitre à essuyer, notamment pour les vitesses élevées d'avancement du véhicule en bénéficiant de l'effet de portance aérodynamique dû au vent relatif qui s'applique sur le volet aérodynamique, ou d'éviter un phénomène de décollement de l'essuie-glace à haute vitesse.

Afin de transmettre l'effort de portance aérodynamique à l'essuie-glace, il est nécessaire de concevoir des moyens de fixation du volet aérodynamique sur les éléments mobiles de l'essuie-glace, c'est-à-dire sur le balai et/ou sur le bras d'essuie-glace.

Une première technique consiste à réaliser l'accessoire aérodynamique venu de matière, par exemple par moulage en matière plastique, avec un composant du balai d'essuie-glace, ou du dispositif de connexion du balai d'essuie-glace sur l'extrémité libre du bras d'essuie-glace.

Cette technique n'est pas entièrement satisfaisante dans la mesure où elle complique de manière inutile la forme et la réalisation des composants auxquels est associé le volet aérodynamique.

Il a également déjà été proposé de réaliser les moyens de fixation sous la forme de rivets transversaux qui s'étendent selon une direction sensiblement perpendiculaire à la direction générale longitudinale de l'essuie-glace.

Cette solution n'est pas non plus satisfaisante dans la mesure où l'extrémité de la tête du rivet, du côté de l'accessoire aérodynamique, est formée sur la surface aérodynamique fonctionnelle qui n'est donc plus parfaitement lisse, ce qui nuit à son fonctionnement et à son aspect esthétique général.

Afin de remédier à ces inconvénients, la présente invention propose un bras d'essuie-glace, un balai d'essuie-glace et au moins un accessoire aérodynamique fixé au balai et/ou au bras d'essuie-glace et qui s'étend longitudinalement le long d'au moins une partie du balai et/ou du bras d'essuie-glace, des moyens de fixation de l'accessoire aérodynamique comportant au moins une tige transversale de fixation dont une portion d'extrémité libre est reçue dans un logement de l'accessoire aérodynamique et comporte des moyens pour sa retenue axiale dans le logement. (essuie-glace du type divulgué par EP-A-0459302) caractérisé en ce que la tige constitue l'axe d'articulation et en ce que la portion d'extrémité libre de la tige est reçue dans un logement borgne.

Selon des modes particuliers de réalisation de l'invention :
- la portion d'extrémité libre de la tige reçue dans le logement borgne comporte au moins un crochet ou une griffe de retenue qui coopère avec la paroi du logement ;
- la paroi du logement est une paroi lisse ;
- la portion d'extrémité de la tige reçue dans le logement borgne comporte un collet radial qui est reçu dans une gorge radiale formée dans la paroi du logement ;
- la paroi du logement comporte un épaulement radial interne qui est reçu dans une gorge formée dans la portion d'extrémité de la tige ;
- le logement borgne est réalisé venu de matière par moulage avec l'accessoire aérodynamique, notamment en matière plastique ;
- la portion d'extrémité de la tige reçue dans le logement borgne est emmanchée à force dans ce dernier;
- le logement borgne est surmoulé sur la portion d'extrémité de la tige ;
- la tige est un axe d'articulation de deux composants de l'essuie-glace ;
- le balai d'essuie-glace comporte une structure articulée de support d'une lame d'essuyage comportant au moins deux composants articulés, la tige constituant l'axe d'articulation de ces deux composants de la structure articulée.

D'autres caractéristiques et avantages de l'invention apparaîtront à la lecture de la description détaillée qui va suivre pour la compréhension de laquelle on se reportera aux dessins annexés dans lesquels :
- La figure 1 est une vue partielle en élévation d'un balai d'essuie-glace équipé d'un volet aérodynamique fixé conformément aux enseignements de l'invention ;
- la figure 2 est une vue de dessus de la figure 1;
- la figure 3 est une vue en section selon la ligne 3-3 de la figure 1 illustrant un premier mode de réalisation des moyens de fixation du volet aérodynamique sur le balai d'essuie-glace, conforme aux enseignements de l'invention ; et
- les figures 4 et 5 sont des vues similaires à celles de la figure 3 illustrant deux autres modes de réalisation des moyens de fixation selon l'invention.

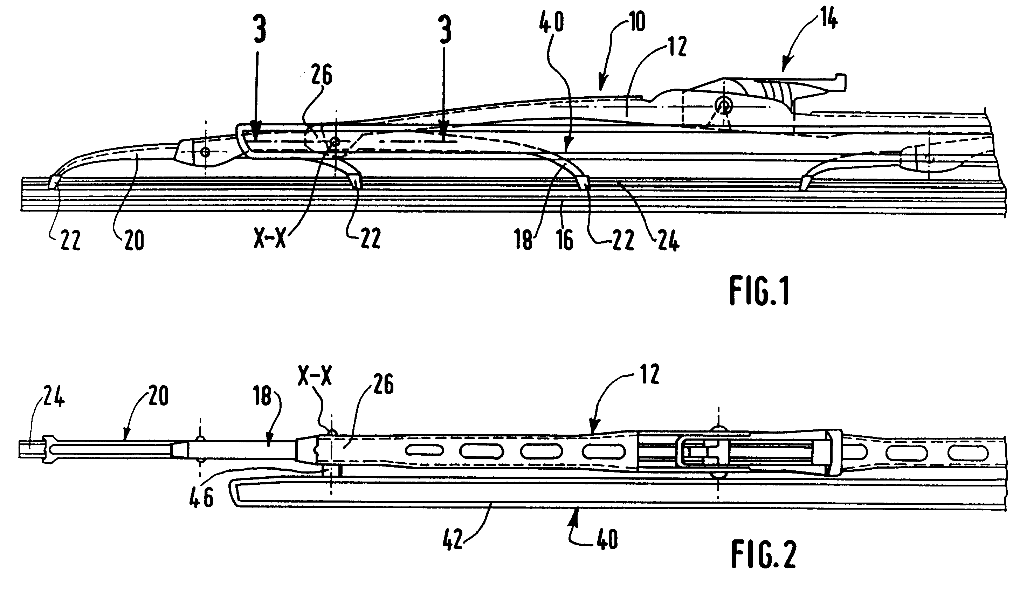

On a représenté sur les figures 1 et 2 un balai d'essuie-glace 10 comportant notamment un étrier principal 12 qui, en section transversale, présente une forme générale de U inversé et qui est articulé au moyen d'un connecteur 14 sur l'extrémité libre d'un bras d'essuie-glace (non représenté).

L'étrier principal 12 appartient à une structure articulée de support d'une lame d'essuyage 16, par exemple pour l'essuyage d'un pare-brise de véhicule.

La structure articulée du balai 10 comporte, outre l'étrier principal 12, des étriers ou palonniers secondaires 18 et 20 qui comportent, à leurs extrémités libres, des griffes 22, qui coopèrent avec le bord supérieur 24 de la lame d'essuyage 16.

L'étrier intermédiaire 18 est articulé, dans sa portion médiane, sur l'extrémité libre 26 de l'étrier principal 12 autour d'un axe géométrique X-X.

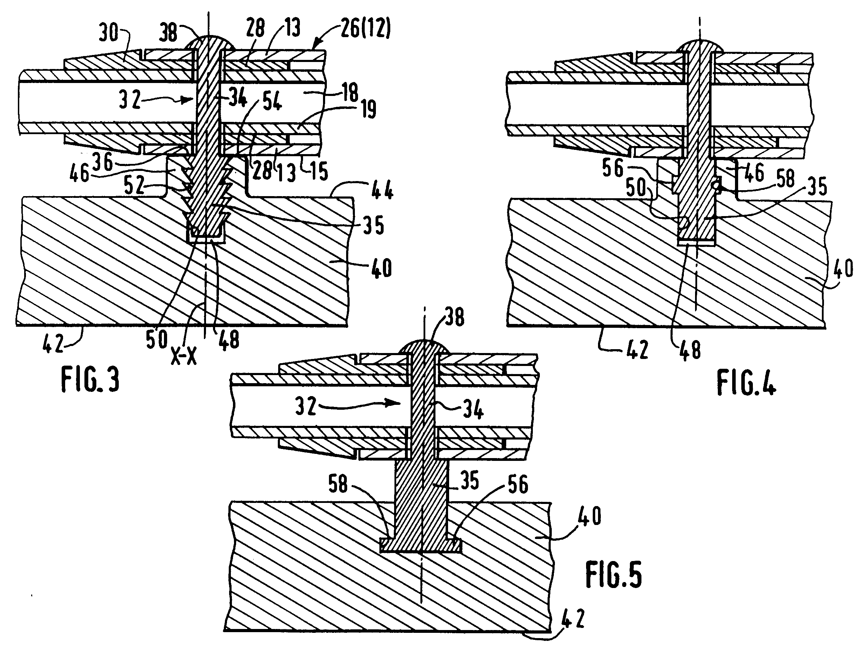

Le palonnier intermédiaire 18 présente également, en section transversale, une forme générale de U inversé de manière que ses joues latérales 19 soient reçues entre les joues latérales parallèles 13 de l'étrier principal 12 comme cela est illustré à la figure 3.

Des ailes parallèles 28 d'une entretoise antibruit 30 sont reçues entre les faces en vis-à-vis des joues 13 et 19.

L'articulation du palonnier intermédiaire 18 sur la portion d'extrémité 26 de l'étrier principal 12 est assurée au moyen d'un axe d'articulation 32.

L'axe d'articulation 32 est constitué pour l'essentiel par une tige métallique 34 qui traverse les joues et ailes 13, 19 et 28.

Le corps de la tige 34 comporte un épaulement radial 36 qui prend appui contre la face externe 15 de l'une des joues 13 (voir figure 3) tandis que son extrémité libre 38 est représentée sous la forme d'une tête sertie de rivet.

L'assemblage des différents composants est réalisé, après avoir introduit le corps de la tige 34 entre les joues et ailes 13, 19 et 28, par rivetage de la tête 38.

Le balai 10 est également équipé d'un volet aérodynamique 40 qui s'étend longitudinalement, sur un côté du balai, le long de la structure articulée de support.

Le volet aérodynamique 40 est une pièce moulée en matière plastique de forme générale allongée et dont la surface fonctionnelle active 42 crée un phénomène de portance aérodynamique qui a pour effet d'accroître la pression d'essuyage appliquée par le bras d'essuie-glace à la lame d'essuyage 16 par l'intermédiaire de la structure articulée.

Le volet aérodynamique 40 est fixé à la structure articulée au voisinage de ses deux extrémités.

On décrira maintenant en détail les moyens de fixation du volet 40 sur la structure articulée, en se référant, à titre d'exemple, à l'extrémité longitudinale de gauche du volet 40 en considérant les figures 1 et 2.

Le volet 40 est une pièce massive en matière plastique dont la face interne 44 opposée à la face externe active 42, comporte une portion cylindrique en saillie 46 qui s'étend transversalement en direction de la structure articulée.

La portion 46 comporte un logement interne borgne 48 qui, dans l'exemple de réalisation illustré à la figure 3 et avant la fixation du volet 40 sur la structure articulée, est réalisé sous la forme d'un trou cylindrique à paroi interne lisse 50.

La portion d'extrémité 35 de la tige 34 comporte une série de griffes ou crochets 52 qui font saillie radialement vers l'extérieur de manière à constituer une portion d'extrémité formant harpon qui est emmanchée à force dans le logement borgne 48 pour la fixation du volet 40 sur la structure articulée.

L'opération de montage est particulièrement simple dans la mesure où elle consiste à venir emmancher les extrémités de tiges 35 en forme de harpons dans les logements 48 jusqu'à amener la face radiale d'extrémité 54 des portions en saillie 46 en appui contre la face externe 15 de la joue latérale 13 de l'étrier principal 12.

Dans cette position, les crochets ou griffes 52 ont pénétré dans la matière plastique constitutive du corps 40 du volet aérodynamique et s'opposent à toute extraction axiale de la portion d'extrémité 35 de la tige 34 hors du logement 48.

Dans la variante de réalisation illustrée à la figure 4, la portion d'extrémité 35 est une portion cylindrique qui est reçue dans la paroi cylindrique 50 du logement 48.

La portion d'extrémité 46 comporte un épaulement radial extérieur 56 qui est reçu dans une gorge radiale complémentaire 58 formée dans la paroi cylindrique 50 du logement 48.

Dans la mesure où la gorge 58 est formée dans la zone de la portion en saillie 46, il est possible d'emmancher à force la portion d'extrémité 35 avec son épaulement radial ou collet radial 56 en utilisant les capacités de déformation élastique de la portion 46.

Dans le mode de réalisation illustré à la figure 5, la tige 34 et sa portion d'extrémité 35 sont réalisés sous la forme d'un insert sur lequel est surmoulé le corps du déflecteur aérodynamique 40.

La retenue axiale de la portion d'extrémité 35 est assurée au moyen d'un collet radial 56 reçu dans une gorge 58.

Dans ce mode de réalisation, le déflecteur aérodynamique 40, avec les tiges 34 préalablement surmoulées, participe à l'assemblage de la structure articulée, les opérations de sertissage des têtes 38 des axes 32 étant bien entendu postérieures à la mise en place du volet aérodynamique 40.

Dans tous les modes de réalisation illustrés sur les figures, on constate que la surface externe active 42 du volet aérodynamique 40 est parfaitement lisse.

L'invention n'est pas limitée aux modes de réalisation qui viennent d'être décrits.

Elle trouve également à s'appliquer lorsque l'accessoire aérodynamique, qu'il s'agisse d'un volet aérodynamique ou d'un déflecteur aérodynamique, est fixé pour tout ou partie sur le bras d'essuie-glace, les tiges de fixation pouvant être des tiges d'articulation du bras d'essuie-glace ou des éléments réalisés venus de matière avec ce dernier.

## Revendications

1. Essuie-glace du type comportant un bras d'essuie-glace , un balai d'essuie-glace (10) comprenant notamment un étrier principal (12) relié à au moins un étrier secondaire (18,20) par un axe d'articulation (32) et au moins un accessoire aérodynamique (40) fixé au balai (10) et/ou au bras d'essuie-glace et qui s'étend longitudinalement le long d'au moins une partie du balai et/ou du bras d'essuie-glace, des moyens de fixation de l'accessoire aérodynamique comportant au moins une tige transversale (34) de fixation dont une portion d'extrémité libre (35) est reçue dans un logement (48) de l'accessoire aérodynamique (40) et, comporte des moyens (52, 56) pour sa retenue axiale dans le logement 48, caractérisé en ce que la tige (34) constitue l'axe d'articulation (32) et en ce que la portion d'extrémité libre (35) de la tige (34) est reçue dans un logement borgne (48)

2. Essuie-glace selon la revendication 1, caractérisé en ce que la portion d'extrémité libre (35) de la tige reçue dans le logement borgne (48) comporte au moins un crochet (52) de retenue qui coopère avec la paroi (50) du logement (48).

3. Essuie-glace selon la revendication 2, caractérisé en ce que la paroi du logement (50) est une paroi lisse.

4. Essuie-glace selon la revendication 1, caractérisé en ce que la portion d'extrémité (35) de la tige (34) reçue dans le logement borgne (48) comporte un collet radial (56) qui est reçu dans une gorge radiale (58) formée dans la paroi du logement (48).

5. Essuie-glace selon la revendication 1, caractérisé en ce que la paroi du logement (50) comporte un épaulement radial interne qui est reçu dans une gorge formée dans la portion d'extrémité (35) de la tige (34).

6. Essuie-glace selon l'une quelconque des revendications précédentes, caractérisé en ce que le logement borgne (48) est réalisé venu de matière par moulage avec l'accessoire aérodynamique (40), notamment en matière plastique.

7. Essuie-glace selon l'une quelconque des revendications 1 à 6, caractérisé en ce que la portion d'extrémité (35) de la tige est emmanchée à force dans le logement borgne (48).

8. Essuie-glace selon l'une quelconque des revendications précédentes, caractérisé en ce que la tige (34) est un axe d'articulation de deux composants (12, 18) de l'essuie-glace.

9. Essuie-glace selon la revendication 8, caractérisé en ce que le balai d'essuie-glace (10) comporte une structure articulée de support d'une lame d'essuyage (16) comportant au moins deux composants articulés (12 - 26, 18), la tige (34) constituant un axe d'articulation de ces deux composants de la structure articulée.

## Claims

1. A screen wiper of the type comprising a screen wiper arm, a screen wiper blade (10) having in particular a main yoke (12) coupled to at least one secondary yoke (18, 20) by a member (32) defining an axis of articulation, and at least one aerodynamic accessory (40) which is fixed to the blade (10) and/or to the screen wiper arm, and which extends longitudinally along at least part of the blade and/or the screen wiper arm, means for fastening the aerodynamic accessory comprising at least one transverse fastening bar element (34), having a free end portion (35) which is received in a housing (48) of the aerodynamic accessory (40) and which comprises means (52, 56) for retaining it axially in the housing (48), characterised in that the bar element (34) constitutes the member (32) defining the axis of articulation, and in that the free end portion (35) of the bar element (34) is received in a blind housing (48).

2. A screen wiper according to Claim 1, characterised in that the free end portion (35) of the bar element received in the blind housing (48) includes at least one retaining hook (52) which cooperates with the wall (50) of the housing (48).

3. A screen wiper according to Claim 2, characterised in that the wall (50) of the housing is a smooth wall.

4. A screen wiper according to Claim 1, characterised in that the end portion (35) of the bar element (34) received in the blind housing (48) includes a radial collar portion (56) which is received in a radial groove (58) formed in the wall of the housing (48).

5. A screen wiper according to Claim 1, characterised in that the wall (50) of the housing has an internal radial shoulder which is received in a a groove formed in the end portion (35) of the bar element (34).

6. A screen wiper according to any one of the preceding Claims, characterised in that the blind housing (48) is formed by moulding integrally with the aerodynamic accessory (40), in particular in a plastics material.

7. A screen wiper according to any one of Claims 1 to 6, characterised in that the end portion (35) of the bar element is force-fitted into the blind housing (48).

8. A screen wiper according to any one of the preceding Claims, characterised in that the bar element (34) defines an axis for the articulation of two components (12, 18) of the screen wiper.

9. A screen wiper according to Claim 8, characterised in that the screen wiper blade (10) includes an articulated structure for supporting a wiping strip (16) and comprising at least two articulated components (12-26, 18), the bar element (34) defining an axis for the articulation of the said two components of the articulated structure.

## Patentansprüche

1. Scheibenwischer, bestehend aus einem Scheibenwischerarm, einem Scheibenwischerblatt (10), das insbesondere einen Hauptbügel (12) umfaßt, der durch eine Gelenkachse (32) mit wenigstens einem Zwischenbügel (18, 20) verbunden ist, und wenigstens einem aerodynamischen Zusatzgerät (40), das am Scheibenwischerblatt (10) und/oder am Scheibenwischerarm befestigt ist und das sich in Längsrichtung an wenigstens einem Teil des Scheibenwischerblatts und/oder des Scheibenwischerarms entlang erstreckt, Mitteln zur Befestigung des aerodynamischen Zusatzgeräts, die wenigstens einen quer angeordneten Befestigungsstift (34) umfassen, von dem ein freies Endstück (35) in eine Aufnahme (48) des aerodynamischen Zusatzgeräts eingesetzt ist und Mittel (52, 56) für seine axiale Halterung in der Aufnahme (48) umfaßt , **dadurch gekennzeichnet,** daß der Stift (34) die Gelenkachse (32) bildet und daß das freie Endstück (35) des Stifts (34) in eine Blindaufnahme (48) eingesetzt ist.

2. Scheibenwischer nach Anspruch 1 , **dadurch gekennzeichnet,** daß das in die Blindaufnahme (48) eingesetzte freie Endstück (35) des Stifts wenigstens einen Haltehaken (52) umfaßt, der mit der Wand (50) der Aufnahme (48) zusammenwirkt.

3. Scheibenwischer nach Anspruch 2 , **dadurch** **gekennzeichnet,** daß die Wand der Aufnahme (50) eine glatte Wand ist.

4. Scheibenwischer nach Anspruch 1 , **dadurch gekennzeichnet,** daß das in die Blindaufnahme (48) eingesetzte Endstück (35) des Stifts (34) einen radialen Bund (56) umfaßt, der in eine in die Wand der Aufnahme (48) eingearbeitete radiale Auskehlung (58) eingesetzt ist.

5. Scheibenwischer nach Anspruch 1 , **dadurch gekennzeichnet,** daß die Wand der Aufnahme (50) eine radiale Innenschulter umfaßt, die in eine in das Endstück (35) des Stifts (34) eingearbeitete Auskehlung eingesetzt ist.

6. Scheibenwischer nach einem der vorangehenden Ansprüche, **dadurch gekennzeichnet**, daß die Blindaufnahme (48) einstückig an dem aerodynamischen Zusatzgerät (40), insbesondere aus Kunststoff, angeformt ist.

7. Scheibenwischer nach einem der Ansprüche 1 bis 6, **dadurch gekennzeichnet,** daß das Endstück (35) des Stifts fest in die Blindaufnahme (48) eingepreßt wird.

8. Scheibenwischer nach einem der vorangehenden Ansprüche, **dadurch gekennzeichnet**, daß der Stift (34) eine Gelenkachse von zwei Bestandteilen (12, 18) des Scheibenwischers ist.

9. Scheibenwischer nach Anspruch 8 , **dadurch gekennzeichnet,** daß das Scheibenwischerblatt (10) eine gelenkige Tragstruktur für einen Wischergummi (16) umfaßt, die wenigstens zwei gelenkig verbundene Bestandteile (12 - 26, 18) umfaßt, wobei der Stift (34) eine Gelenkachse dieser beiden Bestandteile der Gelenkstruktur bildet.
